Europäisches Patentamt

European Patent Office

Office européen des brevets

(11) Publication number: **0 366 221**
**A2**

## EUROPEAN PATENT APPLICATION

(21) Application number: **89303280.5**

(22) Date of filing: **03.04.89**

(51) Int. Cl.⁵: **G01V 3/10**

(30) Priority: **25.10.88 GB 8824957**

(43) Date of publication of application:
**02.05.90 Bulletin 90/18**

(84) Designated Contracting States:
**CH DE FR GB IT LI NL**

(71) Applicant: **ROBERT BOSCH GMBH**
**Robert-Bosch-Platz 1**
**D-7016 Gerlingen-Schillerhöhe(DE)**

(72) Inventor: **Robertson, Paul Andrew**
**41 Whitehall Gardens**
**Duxford Cambridge(GB)**

(74) Representative: **Nash, Keith Wilfrid et al**
**KEITH W. NASH & Co. Pearl Assurance**
**House 90-92 Regent Street**
**Cambridge CB2 1DP(GB)**

(54) **Buried metal detector.**

(57) A buried metal detection which comprises an assembly of magnetically susceptible material (111) in at least one U-shape having parallel links (112) having sensing faces (114, 115), together with coils (113) are wound on each limb, the coils being supplied with current to produce an alternating electromagnetic field external to the assembly, means for moving the assembly or for switching the coils so that the field is aligned in different directions and at differing positions at different times, and monitoring means sensitive to variation in the energy supply drawn by the coils.

Fig. 8

EP 0 366 221 A2

## Buried Metal Detector

### Field of the invention

This invention relates to a buried metal detector, more particularly a detector for sensing metal rods and grids buried in material such as concrete.

### Background to the invention

Conventional metal detectors such as those intended for locating metal objects buried in concrete structures and underground are relatively simple devices which detect the presence of metal by its effect on the electrical properties of an inductor coil, usually connected in a resonant circuit with one or more capacitors. Such devices are predominantly sensitive only to the proximity of metal objects and not to the orientation of them. Several commercial devices (so called "cover meters") are available for detecting steel reinforcing bars and grids beneath a covering of concrete. These are complex systems, based on detecting the resonant eddy currents induced in the rods by a pulsed driver coil, and are correspondingly very expensive.

It is one object of this invention to provide a relatively simple metal rod and grid detector which is capable of enabling an operator to detect both the presence and the orientation of rods and grids buried in concrete or other non-metallic material. The layout of buried metal pipes and cables may also be determinable with the device, which is technically relatively simple in comparison with eddy current cover meters and can therefore be produced at a much lower cost.

More especially, the invention can enable an operator to map out the layout of metal reinforcing rods, cables and pipes within a concrete structure easily and without the necessity to use the type of device known as a "cover meter", prior to operations such as hole drilling and channel cutting which may be required.

In this way, damage to the buried metal structures and unnecessary holes may be avoided, using relatively inexpensive detecting apparatus.

General purpose metal detectors tend to be designed for optimum sensitivity and produce the highest possible output signal for a given disturbance in the flux pattern associated with the sensing coil. This is clearly of importance when attempting to locate metallic objects buried at considerable distance below the nearest accessible surface over which the detector can be moved. However, for metal detecting purposes associated with structures, such as detectors intended for identifying the position of metal reinforcing material in concrete structures, the metal is not normally situated at any great depth and the key parameter which needs to be optimised is the resolution of the detector - ie the ability of a device to pinpoint the boundaries of buried metallic objects.

This is particularly the case when the detector is being used to determine where a concrete structure can be drilled so as to avoid any buried metallic components.

It is another object of the present invention to provide an improved sensing coil assembly for a metal detector, which will provide enhanced resolution when being used to determine the precise position of buried metal objects.

### The invention

According to one aspect of the invention, a buried metal detector comprises an assembly of magnetically susceptible material (referred to hereinafter as magnetic material) with electrical conducting coils which are supplied with an alternating electric current so as to produce an alternating electromagnetic field external to the assembly and which in effect is caused to be aligned in different directions and at different positions at different times, and monitoring means sensitive to the variation in the energy drawn from the alternating current supply as the angular position of the external field is varied, thereby to provide an indication of the proximity of the device to electrically conducting material in the external field.

Various ways and means may be employed to cause the electromagnetic field to be aligned in different directions and at different positions at different times. In a preferred method, the external electromagnetic field is caused to rotate.

According to another aspect of the invention, the field is caused to rotate by physically rotating at least one of the electrically conducting coils.

According to another aspect of the invention the external field is caused to rotate by physically rotating at least one piece of magnetic material.

According to a further feature of the invention, the magnetic material is a ferrite or alloy powder or other such magnetic material selected to absorb very little energy at the frequency of the alternating field, whilst according to another feature the or at least one component of magnetic material is in the shape of a U and is caused to rotate about an axis which is in the plane of the U parallel to an outer arm of the U.

According to another aspect of the invention, at least three cores of magnetic material are arranged with their axes substantially parallel, with electrically conducting coils, arranged so that each coil preferentially influences one core of magnetic material. Each core of magnetic material has one end (facing the space in which metal is to be detected) spaced from any other magnetic material, and its other end near to magnetic material, and its other end near to magnetic material, thus forming a low reluctance path to the corresponding end of at least one other core.

According to another aspect of the invention, the magnetic core material is chosen such that its magnetic permeability and loss characteristics do not change significantly when it is subject to stray magnetic fields such as the Earth's field or those from magnetised objects in the vicinity of the core.

According to still another feature of the invention at least two inductors are configured such that the presence of electrically connected loops in the buried metal target may be detected resulting from buried metal bars being electrically connected to each other at their crossing points.

According to another feature of the invention, the metal sensor signal is processed, taking into account whether the buried metal rods are electrically connected to each other or not, such that a consistent, unambiguous interpretation of the buried bar positions and orientations may be obtained.

In an embodiment of the invention, the inductors formed by coils wound on each core of magnetic material described previously herein are connected to a capacitor to form a resonant circuit. The natural frequency of resonance and the inductor shape is such that electromagnetic coupling induces eddy current losses in a buried metal object which alter the Q-factor of the resonant circuit. Typically a frequency in the range 25kHz - 2250kHz is suitable for this application. Thus, if the resonant circuit is appropriately connected to an active circuit element such as a field effect transistor to form a free running oscillator, the oscillator amplitude decreases if the inducor is brought into close proximity with a metal object. This technique of locating metal objects by induced eddy current loss from a tuned circuit is well known to those versed in the art of metal detection. The difference in oscillator amplitude in the presence of a metal object from that in the absence of any metal object is hereinafter refered to as the 'dip signal' or 'loss' signal.

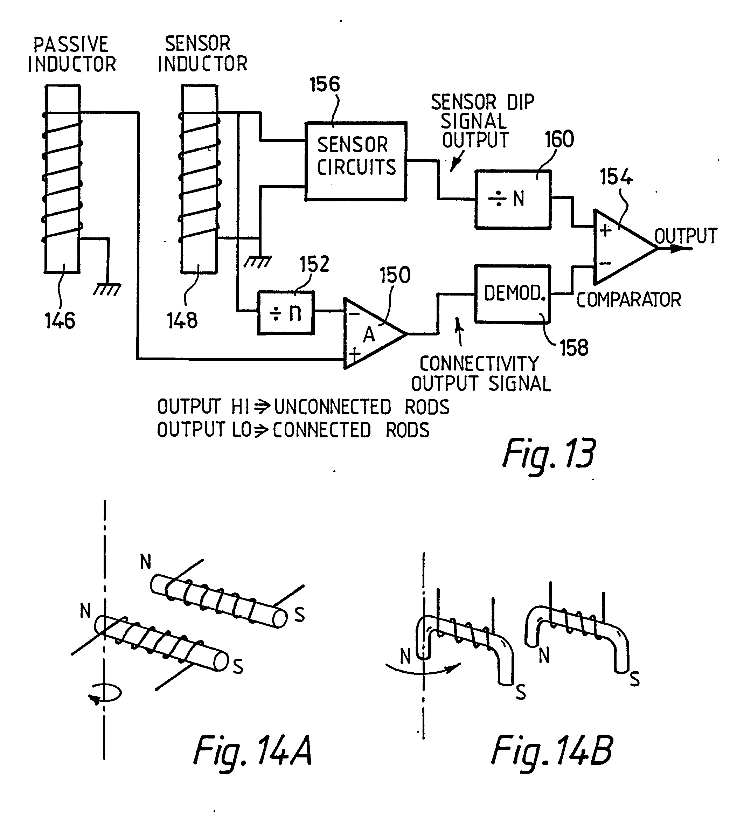

Figures 13 and 14 refer to an inductor design and metal sensor system which has been successfully developed is based on a pair of orthogonally oriented U-cores. Each U-core is sensitive to metal reinforcing bars aligned within 45° or so to its axis and so a pair of U-cores arranged orthogonally are sensitive to bars at any angle.

The size of the U-cores is an important factor in determining the sentitivity and resolution of the device and is related to the minimum bar pitch expected to be detected. The reason for this, is as follows:

If the U-core leg spacing is too high, ie greater that about half the bar pitch, then the U-core orientated perpendicularly to the bards will produce a larger dip signal at position (a) when the core is situated midway between bars than where the core lies over a bar. This is because the inductor pole ends are closer to the bars in position (a) than position (b). For a U-core parallel to the bars, the U-core will always produce a larger dip signal in position (b) than position (a).

Therefore, the oscillator amplitude dip signal will vary in an approximately sinusoidal manner for each U-core as an inductor pair is moved in a direction generally perpendicular to a set of hidden parallel metal bars.

The two signals will be in anti-phase although the signal from a U-core parallel to the bars will be larger. Therefore, a net signal, derived by summing the two U-core signals (one perpendicular and one parallel to the bars), will be of the correct sense, but will clearly be lower in magnitude than that from a U-core which is parallel to the bars, alone. What is more of a problem is that at some intermediate relative angle between the bars and U-core pair, no variation will be seen as the inductor is moved over the rods. In practice, this occurs at around 45° when the U-core orientations interchange between the two cores considered.

If the U-core leg spacing is significantly less than half the grid pitch then both U-cores will produce a dip signal in the same sense as that of U-core parallel to the bars. However, the dip signal magnitude is reduced with the smaller sizes of the U-core employed. The main advantage of this approach is that no ambiguity in the signal can occur and this type of metal detector will produce a minimum dip signal when over the space between bars, whether they are electrically connected at their crossing points or not and regardless of their relative angle to the U-core axes.

With a connected grid of bars, U-cores parallel to and perpendicular to the bars produce a minimum dip signal when the inductor is over the centre of a grid square, regardless of the relative angle, provided the U-core leg spacing is less than the grid pitch.

It has been found that the behaviour of a metal detector employing an inductive loss based detection technique is very different according to whether the buried metal object being sensed consists of electrically isolated metal bars or metal bars which are electrically connected together at their crossing points. This distinction is referred to herein as bar 'connectivity'. In the case where the bars are not connected, the sensor detects the bars themselves, whereas if the bars are connected, the sensor can often detect the closed electrical loops formed by the connected bars. These loops can effectively appear as a 'shorted turn' secondary winding electro-magnetically coupled to the sensor inductor primary winding. The result of this is that an ambiguity can exist in the orientation and position of the metal bars inferred from the metal detector signals.

Connectivity may be resolved by consideration of the magnetic field re-radiated by the grid structure. With an unconnected re-bar, the eddy currents can only flow around the bar and the re-radiated field may therefore be considered to emanate from a line source a centimetre or so across. However, with a connected grid the induced eddy currents flow around the loops formed by the interconnected bars and these loops are very much larger than the rods themselves - often over 10cm across in fact.

The result of this difference in re-radiating source size is that the re-radiated magnetic field is larger in the latter case when observed by a second inductor placed 5cm or so from the main sensor inductor, for a given sensor signal amplitude, when the inductor pole spacing is around 5-10cm and the minimum bar pitch is around 10cm.

In the absence of a metal target in close proximity to the inductor cores, the coupling coefficient between them is around 1-2%. Thus the emf from the receiver inductor may be nulled out by subtracting from it a fraction of the emf applied to the sensor transmitter inductor, as these voltages are approximately in phase.

If the sensor inductor is then aligned over an unconnected rod to give a maximum dip signal then the coupling into the receiver inductor changes very little and the null output remains. However, when aligned over a connected grid target to give a maximum dip signal, the coupling into the receiver inductor increases significantly, and an output signal results.

Thus, this arrangement is sensitive to the connectivity of the target structure.

It has been found that the received signal with a connected target is several times greater than that with an unconnected target, if the range is less than 7.5cm. Thus the two cases can be clearly distinguished from the ratio of the steady state dip to the received signal amplitude, provided the range is less than about 7.5cm.

At very close ranges (ie less than 2cm), connected structures can appear to the sensor as unconnected and conflicting signals can result.

This situation may be clarified by moving the sensor back a little way from the structure.

Conflicting signals can be received from partially connected and unconnected structures, such as may occur at the edges of a grid. This latter situation is difficult to resolve completely. Generally, it will be found that the connected signals will dominate as they are stronger for a given target range.

Aspects of the invention regarding sensor operation with stationary switched coils on U-cores may be summarised as follows:

1. The coils are switched alternately in diagonal pairs so that the sensor is sensitive to rods at any angle to the sensor head. The leg windings are arranged such that opposing diagonal leg end faces are opposite magnetic poles at any one time.

2. The sensor proximity output is derived from the average of the inductive loss signals obtained from each diagonal inductor pair ie the average from the two orthogonal U-cores.

3. The coils may be each permanently connected to a capacitor to form a parallel resonant circuit. Ths LC circuits may be alternately switched to a field effect transistor (FET) forming the active element of the oscillator circuit, by FET analogue switches.

4. Since the LC circuits have a high Q-factor (100), approximately equal resonant frequencies and are in close proximity, they will be mutually coupled to some extent, therefore while one U-core inductor is active in the oscillator circuit, the other must be Q-spoiled by shunting with a transistor or analogue switch or other suitable device to prevent it from interfering with the active circuit.

5. A non-sensing LC circuit may also be incorporated as a reference which shares the same oscillator transistor as the sensing LC circuits, thereby compensating for any drift in the transistor characteristics.

6. For satisfactory operation at any angle to reinforcing bars and grids in a concrete structure, the U-core leg spacing must be less than half the minimum bar spacing pitch.

7. The use of the U-cores has several advantages over straight rod inductors. Thus where 'sensitivity' is defined as being the absolute average signal obtained from an array of metallic bars at a given distance and 'resolution' is defined as being the difference between the maximum and minimum signals obtained as the detector is moved over an array of metallic bars, at a given distance, the resolution for a given sensitivity of the detector is higher with a U-core shaped inductor than a straight rod form of inductor.

Also with U-cores the inductor configuration may conveniently be arranged to allow a drill or other object to pass through the sensor head centre.

U-cores also reduce the sensitivity to metal behind the sensor such that a drill body etc will not interfer with the sensor.

8. To reduce the backward sensitivity further, a conductive screen, such as a piece of copper clad PCB, may be placed behind the inductor assembly.

9. The orientation of the buried rods may be ascertained by rotating the sensor assembly about its central axis until the individual U-core dip signals reach a maximum or minimum. If the rods are not electrically connected to each other then a maximum dip signal is observed from each U-core as it is aligned with the rods. If the rods are electrically connected to each other at their crossing points, thereby forming closed loops, then a maximum dip signal is observed from each U-core when it is aligned perpendicular to the rods.

10. To interpret the orientation as described in point 9, clearly the connectivity (or otherwise) of the rods must be known. This may be ascertained by employing a passive inductor or Hall effect probe as a magnetic field sensor next to one (or both) of the sensor U-cores. The passive inductor(s) is aligned parallel to, but spaced some distance ((less than the grid pitch -say half pitch of (5cm or so)) from one (or both) of the sensor inductors. If the sensor is placed to give a maximum loss signal, the ratio of the magnitude of the e.m.f across the passive inductor to the maximum loss signal will be greater for connected rods forming closed loops than for unconnected rods. Hence the cases may be distinguished.

11. Any number of inductor poles may be employed but at least two are required for sensing the orientation of a rod in a plane parallel to wall surface.

According to a further aspect of the present invention in a metal detector which is to be used to determine the presence of buried metal below a surface by passing an electric current through the coil and moving the coil assembly parallel to the surface and sensing changes in the magnetic field caused as the flux field associated with the coil assembly intersects metallic material below the said surface, at least two coils are provided, mounted on spaced magnetic pole pieces of a magnetic core, and the latter is located within a housing having a sensing face which is moved over a surface of material under inspection with the pole pieces mounted in the housing so that the magnetic axes of the coils are perpendicular to the sensing face.

In general it is found that the resolution of the detector increases with reduced lateral spacing of the cores, although reducing this spacing also reduces the sensitivity of the detector in which the core is mounted.

In this context 'resolution' is defined as the magnitude of the signal variation detected between adjacent spaces and metal objects and 'sensitivity' is defined as the average signal detected over the adjacent metal objects and spaces, relative to that detected away from any metal object.

It is found that the resolution for a given sensitivity is greater when the preferred core assembly is employed in a detector rather than when a straight rod type of core is employed in the same detector circuit.

In a preferred coil assembly the cores protrude from a magnetic backplate.

Where the device is to be used to identify metal free regions and permit the surface of the material under inspection to be marked to denote such regions, a central aperture is provided in the backplate through which a marking implement can be pushed.

When the device is to be used in conjunction with a drill, the central aperture is preferably such as to permit a drill bit to protrude therethrough to drill the material aperture, when an indicator associated with the detector indicates a metal free region.

A sheet of conductive sheet of non-magnetic material may be mounted to the rear of the coil assembly to reduce sensitivity in the rearward direction; and where a drilling aperture is provided, the conductive sheet must be similarly apertured. The conductive sheet reduces the effect of a metal drill casing on the coil assembly.

The invention will now be described by way of example with reference to the accompanying drawings in which:-

Figure 1 illustrates diagrammatically a magnetic core and coil assembly for use in a metal detector.

Figure 2 is a similar view of one convenient design of core and coil assembly.

Figure 3 is a block circuit diagram showing how an imbalance between the impedances of the coils, caused by the presence of metal, can be detected, and

Figure 4 is a perspective view of an electric powered drill having a metal sensing device in accordance with the invention mounted thereon.

Figure 5 is a circuit diagram of a complete detector embodying the invention.

Figure 6 shows how two pairs of U-shaped cores set orthogonally will produce a different response from parallel bars depending on the spacing between the bars and the position of the cores, and

Figure 7 is a perspective view of a U-core pair envisaged in Figure 6.

Figure 8 is a diagrammatic view of another embodiment of detector;

Figures 9 and 10 show modifications;

Figure 11 shows a monitoring circuit;

Figure 12 shows a metal grid the proximity and orientation of which is detectable by the detector;

Figure 13 illustrates how inductors may be employed in a connectivity detector, and

Figure 14A and 14B show the different arrangement using straight and U-shaped cores, and the position of the axes of rotation.

Description of Embodiments

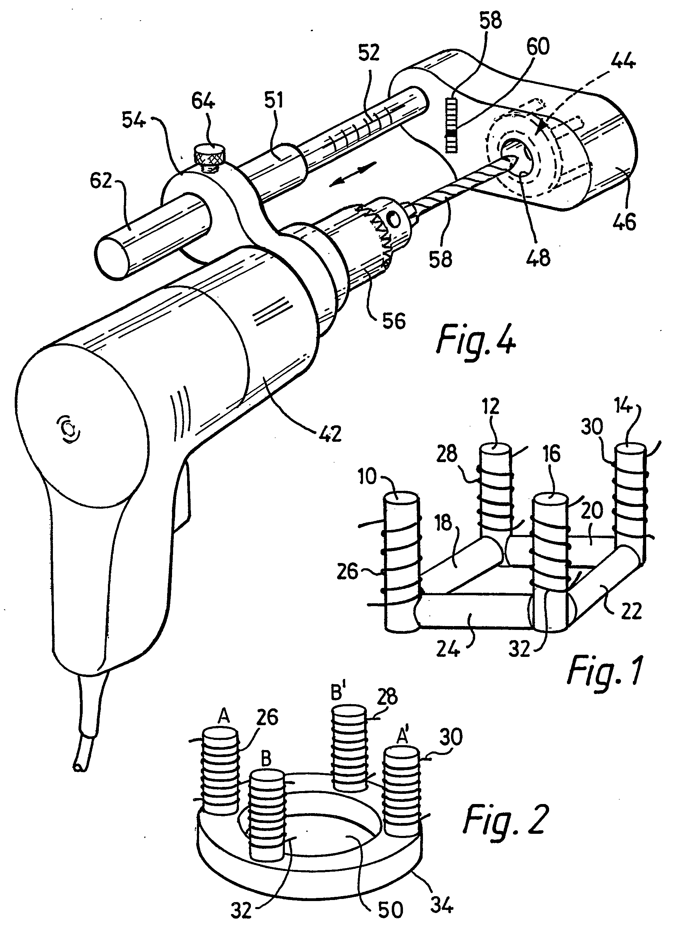

A core and coil assembly embodying the invention is shown in Figure 1. This comprises 4 pole pieces 10, 12, 14 and 16 linked by 4 bridge pieces 18, 20, 22 and 24. Four coils 26, 28, 30 and 32 are carried in the four pole pieces 10, 12, 14 and 16.

An alternating magnetic field may be produced by switching a source of alternating currents to the four windings so that first one pair 12, 16 and then the other pair 10, 14 are energised, in succession.

It has been found that by mounting the coils on the pole pieces instead of on the bridge pieces, so a considerable increase is obtained in the resolving power of the device - ie the ability of the device to select and identify regions containing metal and those clear of metal in a material under inspection.

A preferred construction of the core assembly is shown in Figure 2 in which the bridge pieces are replaced by an annular ring 34 of magnetisable material the pole pieces are bolted, riveted, brazed, stuck or otherwise secured to the ring 34 at four equally circularly spaced points there_around.

The inductor arrangements shown in Figures 1 and 2 enable an unobstructed path along the axis of the sensor to be obtained which allows a marking device such as a pen or a drill bit to reach the wall with the sensor in place. Thus, the desired point on a will, clear or otherwise of buried metal, may be located and easily marked or drilled.

Although the 'redistribution' of the base core members in the preferred configuration (centrally opertured to receive a drill bit) does not seem to affect the performance of the sensor appreciably, the U-cores may interact with each other unless certain precautions are taken. It is important to note that windings on the two U-cores cannot be operated simultaneously as the two pairs of coils then behave as a single wide U-core and the sensor system is then not sensitive in all directions. This is particularly evident with connected grid targets where no variation in signal with lateral movements would be observed if the U-core axes (ie the line between the open end pole faces) were at 45° to the rods.

This is not the case when the U-cores are alternately excited and monitored.

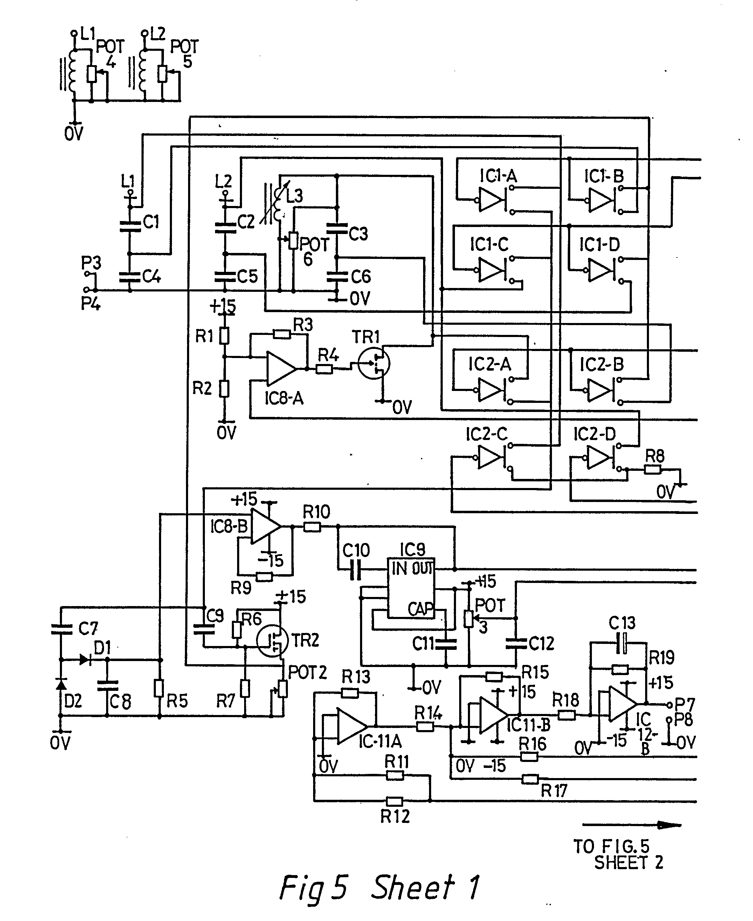

As shown in Figure 4, the invention allows sufficiently good resolution to be obtained as to allow a material to be checked for hidden metal content during drilling, using a powered hand tool such as an electric drill shown generally at 42. The core and coil assembly 44 (such as shown in Figure 2) is mounted within a housing 46 having a central circular aperture 48 which coincides with the circular opening 50 of the core assembly shown in Figure 2. The four pole pieces fitting flush with a flat face (not shown) of the housing which allows the latter to be moved smoothly and freely over a flat surface of a material (such as a wall) which is to be drilled, to determine the presence of metal below the surface.

The housing 46 is carried at the remote end of the telescopic arm 50 (which may be marked with graduations as at 54 to denote the drilled depth) and the inboard end around the body of the drill 42 in the region ot the chuck 56. A drill bit 58 fitted in and protruding from the chuck 56 is aligned with the aperture 48 and in a drilling operation, the drill can pass through the aperture 48. If the aperture is large enough the chuck can also be accommodated to enable the full length of the bit to be used in the drilling operation.

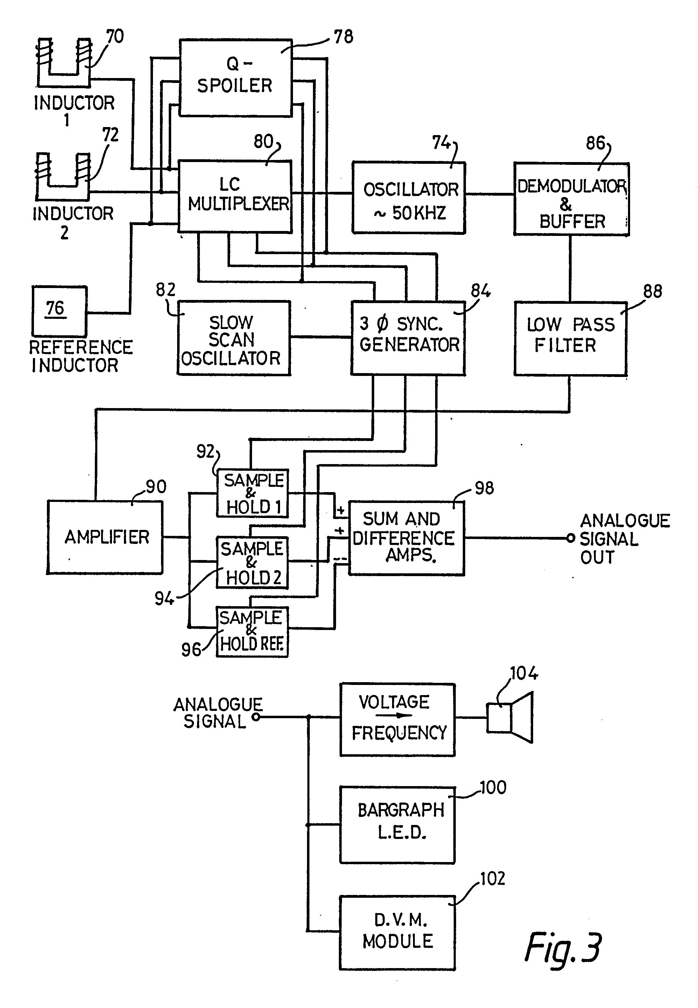

An indicator 58 is provided in the wall of the housing 46 which faces the operator and an imbalance signal such as obtained from a detector 40 associated with the coils (see Figure 3) causes the indicator to reveal (as by a moving element 60) the presence of metallic material below the housing 46.

The end 62 of the telescoping core 50 which is secured to the drill 42 may be slidable in an aperture in the brackets 54 and secured in position by a knuckled knob 64. This allows the housing 46 to be positioned further away from or nearer to the drill housing 42 to accommodate differing lengths of twist drill.

The housing 46 may be removed from the arm 50 to allow it to be manually positioned over a wall or surface of material to be checked for hidden metal content, in which event the aperture 48 allows a pencil or other marking device to be used to denote areas which are free of metal (or vice versa).

The power requirements for the coils and detecting and indicating circuits and device is preferably obtained from a battery located within the housing 46. The latter may be of the rechargable variety and power for charging the battery may be derived from the mains supply to the drill may be employed to power the metal detector unit (or maintain the battery in a charged stage if battery powered).

The orthogonal U-core inductors must be addressed alternately and not simultaneously for correct operation of the sensor.

Referring to Figure 3 the two inductors 70, 72 on the sensing head are addressed in turn and connected to the main RF oscillator transistor 74. A reference inductor 76 is also addressed so that a zero level which is compensated for any changes in transistor characteristics and other sources of drift in the electronics, is available.

Since the resonant LC circuits have a high Q-factor of around 100 and some coupling between them is inevitable because of their close proximity to each other, it is necessary to spoil the Q-factor of each circuit when it is not being addressed. This is achieved by shunting them with a switched resistor using Q-spoiler switching circuit 78.

An alternative approach to prevent cross-coupling effects is to use a different frequency for each resonant LC circuit. However, in this case the reference level may not track so effectively and the U-core inductors may not have the same sensitivity.

An LC multiplexer 80 is driven from a low frequency (30H$_z$) oscillator (82) via 3-phase synch generator 84 comprising pulse and waveform generating logic giving a total cycle rate of 10 per second.

The oscillator signal is demodulated by demodulator 86 and low pass filtered by filter 88 to give 3 consecutive oscillator levels per cycle corresponding to the sensor and reference signals. This signal is amplified by amplifier 90 to increase the level differences, but not the common mode value. At this point, three signal levels are still multiplexed in time.

Demultiplexing is achieved by 3 sample and hold amplifiers 92, 94, 96 which freeze each level a while after the appropriate inductor was switched in. Hence, any initial switching transients are allowed to die away before sampling. The sensing levels are then averaged and differenced from the reference level in sum and difference amplifies 98 to yield an analogue output signal which is updated every 1/30 second.

The analogue signal is passed to the display elements to give bargraph LED and digital visual readings 100 and 102 together with a variable audio indication to the operator via a loudspeaker 104.

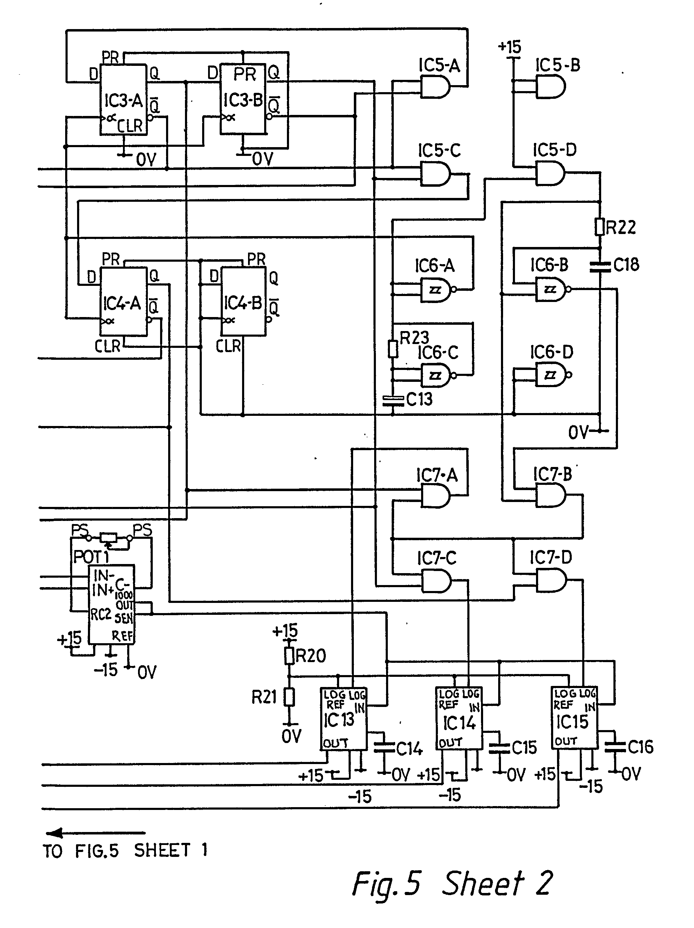

The sensing electronics are illustrated in Figure 5, the output of which is an analogue signal in the range 0-10V. This signal is then passed to display electronics and indicators.

The three resonant LC circuits (C1C4LI, C2C5L2, C3C6L3) are switched in turn onto the field effect transistor (TR2) via the analogue switches IC1 and IC2. The switching control signals are provided by the low frequency oscillator (C19R23IC6-C) and the following logic (IC4, IC5, IC6) which produces a 3 phase 120° shifted rectangular waveform.

The oscillator amplitude is demodulated by the diodes and capacitor network (D1D2C8) and buffered by an operational amplifier (IC8-B). The output from this is low pass filtered by a 5th order switched capacitor filter (IC9) and passed to an instrumentation amplifier (IC10).

Protentiometers across the coils allow the losses in the coils to be equalised, to allow the sensor to be balanced off.

The common mode level of the signal is approximately nulled at the amplifier to leave the stepped signal comprising the relative oscillation levels of the three resonant circuits. The sensing information is actually contained in the differences between the two sensor head inductor levels and the reference inductor level.

The instrumentation amplifier output is sampled and held at different times by three sample and hold amplifiers (IC13, IC14, IC15). The sampling pulse for each amplifier is delayed from the inductor switching time by about 60cms to allow the oscillator level to settle (R22, C18, IC5, IC7). The output of each sample and hold amplifier is an analogue voltage corresponding to each resonant circuit oscillation amplitude less a fixed offset which is the same for all three devices. This voltage level is updated every 1/10th seconds.

The sensor signal, given by (sensor level 1 + sensor level 2 - 2 x reference level) is produced by summing and differencing operational amplifiers (IC11). The final output is made to be positive going and is low pass filtered by a buffer operationsl amplifier (IC 12-B).

The analogue output from P7 typically varies between 0-10V and may be displayed by audio and visual means, as on a bargraph module, a DVM module or through a small loudspeaker as a variable pitch tone generated by a voltage-frequency convertor. Other types of display may also be suitable.

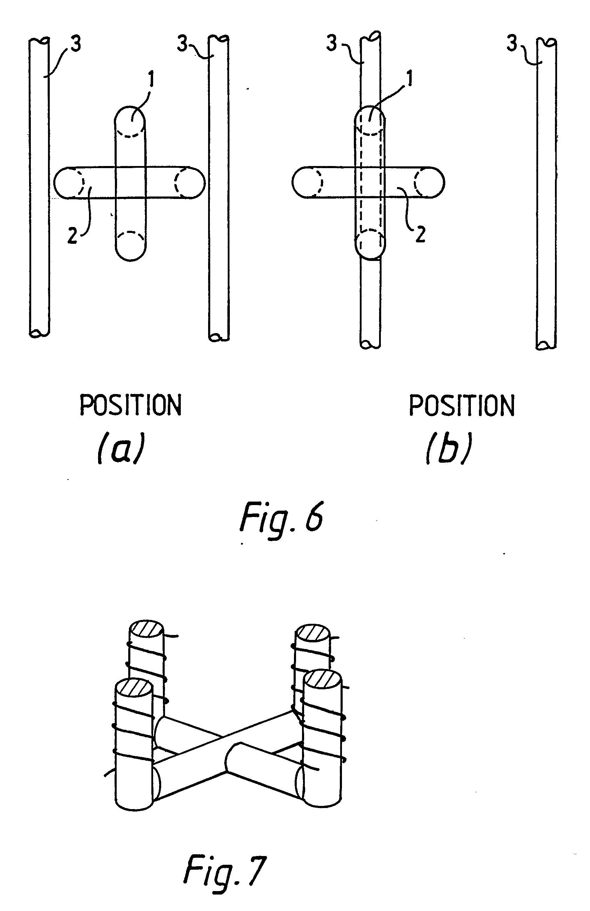

Figures 6 and 7 refer to an inductor design and metal sensor system which has been successfully developed and is based on a pair of orthogonally oriented U-cores. Each U-core is sensitive to metal reinforcing bars aligned within 45° or so to its axis and so a pair of U-cores arranged orthogonally are sensitive to bars at any angle. An example of this configuration is shown in Figure 7.

The size of the U-cores is an important factor in determining the sentitivity and resolution of the device and is related to the minimum bar pitch expected to be detected. The reason for this, will be explained with reference to Figure 6 as follows:-

If the U-core leg spacing is too high, ie greater than about half the bar pitch, then the U-core 2 orientated perpendicularly to the bars will produce a larger dip signal at position (a) when the core is situated midway between bars 3 than at position (b) where the core lies over a bar. This is because the inductor pole ends are closer to the bars in position (a) than position (b). For a U-core 1 parallel to the bars, the U-core will always produce a larger dip signal in position (b) than position (a).

Therefore, the oscillator amplitude dip signal will vary in an approximately sinusoidal manner for each U-core as an inductor pair is moved in a direction generally perpendicular to a set of hidden parallel metal bars.

The two signals will be in anti-phase although the signal from a U-core parallel to the bars will be larger. Therefore, a net signal, derived by summing the two U-core signals (one perpendicular and one parallel to the bars), will be of the correct sense, but will clearly be lower in magnitude than that from a U-core 1 which is parallel to the bars, alone. What is more of a problem is that at some intermediate relative angle between the bars and U-core pair, no variation will be seen as the inductor is moved over the rods. In practice, this occurs at around 45° when the U-core orientations interchange between the two cores considered.

If the U-core leg spacing is significantly less than half the grid pitch then both U-cores will produce a dip signal in the same sense as that of U-core parallel to the bars. However, the dip signal magnitude is reduced with the smaller sizes of the U-core employed. The main advantage of this approach is that no ambiguity in the signal can occur and this type of metal detector will produce a minimum dip signal when over the space between bars, whether they are electrically connected at their crossing points or not and regardless of their relative angle to the U-core axes.

With a connected grid of bars, U-cores parallel to and perpendicular to the bars produce a minimum dip signal when the inductor is over the centre of a grid square, regardless of the relative angle, provided the U-core leg spacing is less than the grid pitch.

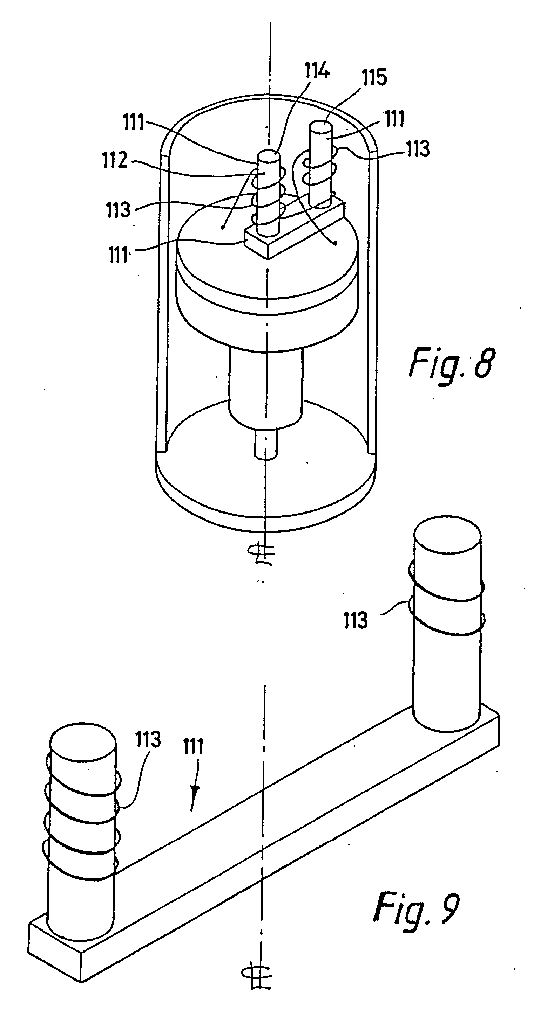

Figure 8 shows an embodiment of the invention using a U-shaped core 111 which rotates about one leg 112. The U-core 111 carries windings 113 which form an inductor, the electrical impedance of which depends on the frequency of excitation and the proximity and orientation of a metal rod in relation to the U-core. During rotation, face 114 does not move very far laterally, whereas face 115 describes a circle.

In this embodiment, the sensor may be a hand held unit of the order of 10 - 20 cm in diameter sweeping out a sensing circle of similar size on a concrete wall. As the rotating face 115 passes over a metal object such as a rod, a peak is detectable by a change in the electrical impedance of the inductor formed by 111 and 113.

A convenient means to detect this change is an ac bridge containing the U-core inductor and a reference inductor bridge. Alternatively, if the U-core inductor is connected with a capacitor to form a resonant circuit, then the increased losses due to electrical loading by the presence of metal will result in a lower amplitude for a given excitation current. Such techniques are well established and known generally in the art of oscillator and metal proximity detection circuits.

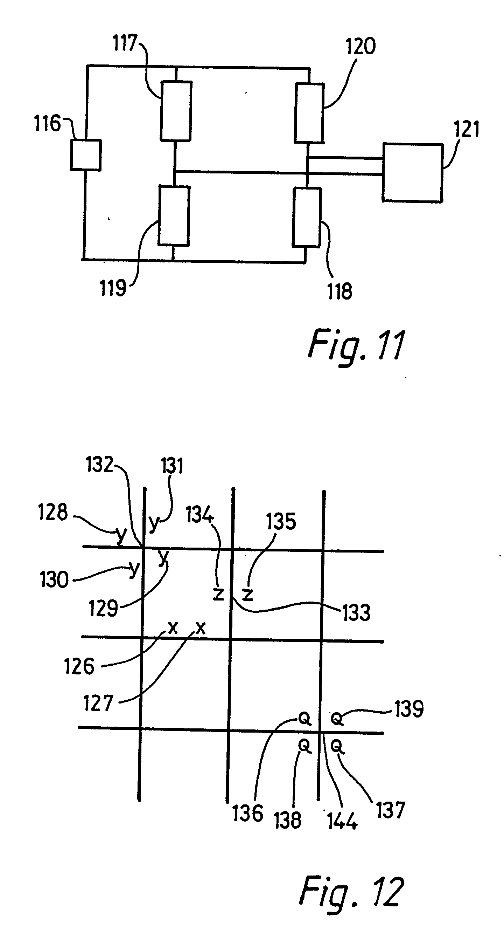

In an alternative arrangement, the coils 113 are electrically separated to form two opposite arms of a bridge whilst the other two arms are reference impedances. Figure 11 shows such a bridge circuit, where 116 is the alternating current supply, 117 and 118 are the two parts of coils 113; 119 and 120 are reference impedances and 121 is an imbalance detector.

Thus, as the core rotates, changes in the impedance of the inductor 113 are observed as the face 115 moves over any metal rods. The face 114 does not move very far laterally and hence the electronic signal variations derived as the core rotates do not depend on any metal beneath the face 114. However, the steady state average impedance of the inductor depends on whether any metal .is in the proximity of either face. It has been found advantageous when scaning over some targets to move the axis of rotation slightly from face 114 towards face 115.

In a preferred embodiment of the invention, the inductors formed by coils wound on each core of magnetic material described previously herein are connected to a capacitor to form a resonant circuit. The natural frequency of resonance and the inductor shape is such that electromagnetic coupling induces eddy current losses in a buried metal object which alter the Q-factor of the resonant circuit. Typically a frequency in the range 25kHz - 250kHz is suitable for this application. Thus, if the resonant circuit is appropriately connected to an active circuit element such as a field effect transistor to form a free running oscillator, the oscillator amplitude decreases if the inductor is brought into close proximity with a metal object. This technique is locating metal objects by induced eddy current loss from a tuned circuit is well known to those versed in the art of metal detection. The difference in oscillator amplitude in the presence of a metal object from that in the absence of any metal object is hereinafter referred to as the "dip signal" or "loss" signal.

Thus, position and orientation of a buried rod in a wall may be located for example by moving the device over the wall to maximise the steady state dip signal, whereupon face 14 will lie above the rod or rods, and the angle of the rod may be ascertained from the peaks in the metal rotation related alternating dip signal observed during each rotation period. These signal peaks may be used to flash an indicator such as a light emitting diode or to activate a wall marker device or both. Thus by moving the device over a wall, an operator can build up a plan of the layout of rods within the wall. A similar procedure can also be applied to metal grids, pipes, cables and the like within the wall.

If the metal bars or wires in a structure are arranged in substantially parallel relationship, interpretation of the indication given by the above-described device is straightforward. However it is common in reinforced concrete construction to use a welded mesh, consisting of two orthognonal sets of equispaced parallel bars, welded together at every crossing point. Equally, orthogonal sets of bars may be emplaced by the steel erector, assembled from individual bars. When the device is used to locate welded mesh, the electrical and magnetic connection of the bars results in effects which differ from what might have been expected.

If the embodiment of Figure 8 is used to locate the mesh shown in Figure 12, initially taking it to be not welded, then a maximum indication will be produced when the line of the core joining faces 114 and 115 is close to and parallel to a bar, e.g. faces I 14 and 115 could be near to the points marked x at 126 and 127. A clear indication is given when a junction is located. When the face 114 is at the junction, point 132, the average level of signal during a rotation is large, and maxima are observed when the face 115 is at the points marked y at 128, 129, 130 and 131, for example.

However, if the mesh of Figure 12 is now considered to be a welded mesh, then with the face 114 at point 133 for example, maximum signals will be obtained when the face 115 is at the points marked z at 134 and 135. When the face 114 is over a junction such as point 144, for example, the average signal during a rotation is large and maxima are observed when the face 115 is at the points marked Q, i.e. 136, 137, 138 and 139.

Thus, interpretation of the raw rotation related signal can be ambiguous, depending on whether or not the buried metal bars are electrically connected to each other at their crossing points to form closed loops.

In order to enable an unambiguous interpretation of the sensor signal, it must be known whether or not the metal target of bars consists of connected bars forming closed loops. This feature of the target is referred to hereinafter as "connectivity".

The connectivity of a target may be ascertained by measuring the electromagnetic field re-radiated from the target as a result of the eddy currents and/or loop currents induced in it by the sensor inductor.

Figure 13 shows an example schematic arrangement which forms a connectivity detector as described above. In this case the e.m.f. from the passive inductor induced by virtue of its mutual inductance with the sensor inductor is nulled out by a proportion of the sensor inductor e.m.f., in the absence of any target metal. When this sensor arrangement is brought into close proximity with a metal target and the sensor dip signal is at or near its maximum, the sensor dip signal and the connectivity sensor signals become non-zero and the ratio of one to the other gives an indication of whether the target rods are electrically connected or not. This indication may be used to invert or leave unaltered the alternating dip signal obtained as the sensor rotates, such that a maximum (or minimum) in this resulting signal is obtained over a rod whether that rod is electrically connected in a loop or not.

It is to be noted that the maximum in the dip signal is only obtained when the sensing inductor is parallel to a buried rod (when buried rods are unconnected) and perpendicular to a buried rod (when the latter forms part of a closed loop of conductive material due to interconnection with other buried rods). Since some signal will be seen even if the sensing inductor is perpendicular to an unconnected rod and some coupling will exist between the sensing inductor and the passive inductor, it is important to ensure that measurements are only made when the sensor signal is at a maximum.

In Figure 13 the inductors may be coils wound on single straight cores as shown in Figure 14A or wound on U-cores as in Figure 14B.

If both single straight cores, then both must be fixed to relative position and rotated about an axes through one pole of the sensor cores.

If both are U-cores, then sensor core rotates about an axis through one link of the U and the other core (which is fixed in position relative to the sensor core) rotates with the latter around the said axis.

If the sensor core is wound on a U-core, the passive inductor may be wound on a straight core, spaced from the U-core.

Typically the spacing between cores will be 3 - 5 cms.

Alternatively, the magnetic field re-radiated by the bars and/or closed loops may be detected with a Hall effect sensor.

In Figure 12 the signals from the two coils 146, 148 are summed in an op-amp 150, the signal from the sensor coil having been divided by a factor in a circuit 152. By using the differential characteristics of the two inputs of the op-amp 150, and by virtue of the fact that the peak to peak amplitude of the sensor signal will only vary by of the order of 0.1 -1% between the presence and the absence of metal, the signal at the output of the op-amp 150 will be substantially near zero and independent of whether metal is being detected or not. The signal level will however depend strongly on whether the metal target is comprised of connected loops or isolated bars. This can be used as an automatic offset signal for a comparator 154, the other input for which is derived from the sensor coil alone via a sensing circuit to detect any dip in the signal.

Since the coils are energised by alternating currents the sensing circuits 156 must demodulate the incoming signals and a corresponding demodulation must be employed at 58 on the signal from 150.

In order to normalise the signal from 156, it must be subjected to an arithmetic division by N of its amplitude by divider 160. The value of N is chosen so that the amplitude of the signal from 160 is approximtely the same as that from 158.

If rods are detected which are electrically connected then the output from the comparator 154 will be high whereas if detected rods are unconnected, the output from 154 will be low. This is because the connectivity signal is greater, for a given dip signal, when the target rods are connected than when they are not.

Figure 9 shows a modified rotating core arrangement wherein the core/coils assembly spins about its axis of symmetry. It is important in mechanically rotated embodiments of the device, such as illustrated in Figures 8 and 9, that any large metal parts such as a motor rotate with the sensor core, so that no spurious rotation related signals are caused due to the sensor detecting its own component parts. Thus, the metal components of the device itself cause only a steady state offset which may be compensated for accordingly. Alternatively, the metal components of the device must appear rotationally symmetric to the sensor core, which could be achieved by screening of the metal components within a metal can or casing. In any case, it is preferable that any metal components should be situated as far away as is reasonably possible from the sensitive inductor, so that their presence has a minimum effect on the operation of the device.

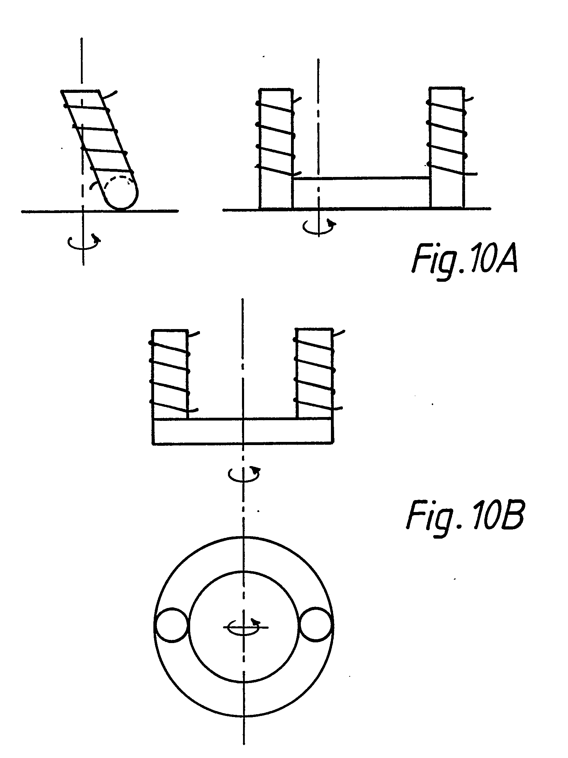

The inductor arrangements shown in Figure 10 enable an unobstructed path along the axis of the sensor to be obtained which allows a marking device such as a pen or a drill bit to reach the wall with the sensor in place.

Thus, the desired point on a wall, clear or otherwise of buried metal, may be located and easily marked or drilled.

The speed of rotation about the axes shown in each core should preferably be sufficiently high that a display appears continuous to the eye, whereby an opeator may rapdily assess the information given by the device, enabling a plan of the buried metal to be quickly and easily derived.

A final point to be noted in relation to the foregoing embodiments is that it has been found that by mounting the coils on the pole pieces instead of on the bridge pieces, so a considerable increase is obtained in the resolving power of the device - ie the ability of the device to select and identify regions containing metal and those clear of metal in a material under inspection.

## Claims

1. A buried metal detector comprising an assembly of magnetically susceptible material (referred to hereinafter as magnetic material) with electrical conducting coils which are supplied with an alternating electric current so as to produce an alternating electromagnetic field external to the assembly and which in effect is caused to be aligned in different directions and at different positions at different times, and monitoring means sensitive to the variation in the energy drawn from the alternating current supply as the angular position of the external field is varied, thereby to provide an indication of the proximity of the device to electrically conducting material in the external field.

2. A buried metal detection according to claim 1, wherein the external electromagnetic field is caused to rotate.

3. A buried metal detection according to claim 2, wherein the external electromagnetic field is caused to rotate either by physically rotating at least one of the electrically conducting coils, or by physically rotating at least one piece of magnetic material.

4. A buried metal detection according to claim 1 or claim 2 or claim 3, wherein the magnetic material is a ferrite or alloy powder or other such magnetic material selected to absorb very little energy at the frequency of the alternating field, and has its magnetic permeability and loss characteristics selected to change to the minimum extent in the presence of extraneous magnetic fields.

5. A buried metal detection according to any of claims 1 to 4, wherein the or at least one component of magnetic material is in the shape of a U and is caused to rotate about an axis which is in the plane of the U.

6. A buried metal detection according to any of claims 1 to 5, having at least three cores of magnetic material arranged with their axes substantially parallel, with electrically conducting coils arranged so that each coil influences one core of magnetic material.

7. A buried metal detection according to any of claims 1 to 6, having at least two coil inductors configured such that the presence of electrically connected loops in the buried metal target may be detected resulting from buried metal bars being electrically connected to each other at their crossing points, whilst the monitoring means is adapted to process the sensor signal to take into account whether the buried metal rods are electrically connected to each other or not, such that a consistent, unambiguous interpretation of the buried bar positions and orientations may be obtained.

8. A buried metal detection according to any of claims 1 to 7 wherein the inductors coils are connected to a capacitor to form a resonant circuit, the natural frequency of resonance and the inductor shape being such that electromagnetic coupling induces eddy current losses in a buried metal object which alter the Q-factor of the resonant circuit.

9. A buried metal detection according to any of the claims 1 to 7, having a pair of orthogonally oriented U-cores of magnetic material, whereby each U-core is sensitive to metal reinforcing bars aligned within 45° or so to its axis and so a pair of U-cores arranged orthogonally are sensitive to bars at any angle.

10. A buried metal detection according to claim 9, having stationary switched coils on U-cores, wherein the coils are switched alternately in diagonal pairs so that the sensor is sensitive to rods at any angle to the sensor head, the leg windings being arranged such that opposing diagonal leg end faces are opposite magnetic poles at any one time.

Fig.4

Fig.1

Fig.2

Fig.3

Fig 5  Sheet 1

TO FIG.5
SHEET 2

TO FIG.5 SHEET 1

Fig.5 Sheet 2

POSITION

*(a)*

POSITION

*(b)*

*Fig. 6*

*Fig. 7*

Fig. 8

Fig. 9

Fig.10A

Fig.10B

Fig. 11

Fig. 12

PASSIVE
INDUCTOR

SENSOR
INDUCTOR

156

SENSOR DIP
SIGNAL
OUTPUT

160

154

SENSOR
CIRCUITS

÷ N

+

OUTPUT

146

148

152

÷ n

150

−

A

+

DEMOD.

158

−

COMPARATOR

CONNECTIVITY
OUTPUT SIGNAL

OUTPUT HI ⇒ UNCONNECTED RODS
OUTPUT LO ⇒ CONNECTED RODS

*Fig.13*

N

N

S

S

*Fig.14A*

N

S

N

S

*Fig.14B*